# EUROPEAN PATENT SPECIFICATION

(11) **EP 3 855 405 B1**
(45) Date of publication and mention of the grant of the patent: **22.03.2023**
(21) Application number: 21152424.4
(22) Date of filing: 20.01.2021
(51) Int. Cl.: G08C 23/04

(54) **DISPLAY APPARATUS AND METHOD OF CONTROLLING THE SAME**
ANZEIGEVORRICHTUNG UND VERFAHREN ZUR STEUERUNG DAVON
APPAREIL D'AFFICHAGE ET SON PROCÉDÉ DE COMMANDE

(30) Priority: 23.01.2020 KR 20200009090
(43) Date of publication of application: 28.07.2021
(73) Proprietor: Samsung Electronics Co., Ltd., Suwon-si 16677 (KR)
(72) Inventor: Hur, Jaemyung, Suwon-si, Gyeonggi-do 16677 (KR); Kim, Minsup, Suwon-si, Gyeonggi-do 16677 (KR); Kim, Jaeyong, Suwon-si, Gyeonggi-do 16677 (KR); Yoo, Hojune, Suwon-si, Gyeonggi-do 16677 (KR); Jin, Kyoungshin, Suwon-si, Gyeonggi-do 16677 (KR)
(74) Representative: Gulde & Partner

(56) References cited:
- EP-A1- 2 876 635
- EP-A2- 2 190 208
- WO-A1-2018/230403
- US-A1- 2014 362 008
- US-A1- 2017 351 929

## Description

### BACKGROUND

### 1. Field

The disclosure relates to a display apparatus including a plurality of sensors, and a method of controlling the same.

### 2. Description of Related Art

Display apparatuses, such as televisions (TVs), computer monitors, and signage, are equipped with a display panel that displays an image, together with an input device for receiving commands related to power on/off, volume control, channel change, screen adjustment, etc. The input device may receive a command from a user through a remote controller that is separated from the display apparatus, and may include a display panel, such as a touch screen, to receive a user command. Display apparatuses are disclosed in EP 2 190 208 A2, EP 2 876 635 A1, US 2017/351929 A1, US 2014/362008 A1 and WO 2018/230403 A1.

However, due to ease of use, manufacturing cost, possibility of loss of a remote controller, and other various factors, the display apparatus still requires a button-type input device provided in a main body of the display apparatus.

### SUMMARY

Provided is a display apparatus according to claim 1 capable of using a plurality of sensors included in the display apparatus as an input device for receiving a command from a user, and a method of controlling the same according to claim 10.

Additional aspects will be set forth in part in the description which follows and, in part, will be obvious from the description, or may be learned by practice of the presented embodiments.

According to an embodiment, there is provided a display apparatus including: a display panel; an illuminance sensor; an infrared sensor; and a controller. The controller is configured to: based on an output of the illuminance sensor being less than or equal to a first reference value and an output of the infrared sensor being greater than or equal to a second reference value, control the display panel to perform an operation corresponding to a combination of the output of the illuminance sensor and the output of the infrared sensor.

The display apparatus further includes an infrared transmitter. The controller is further configured to control the infrared transmitter to transmit infrared rays based on the output of the illuminance sensor being less than or equal to the first reference value.

The infrared sensor, based on receiving the infrared rays transmitted by the infrared transmitter that are reflected from an obstacle, detects the reflected infrared rays, and the controller is further configured to compare the output of the infrared sensor that has detected the reflected infrared rays with the second reference value.

Based on the output of the illuminance sensor being greater than the first reference value or the output of the infrared sensor being less than the second reference value, the controller is further configured to adjust a brightness of an image displayed on the display panel based on the output of the illuminance sensor.

Based on the output of the illuminance sensor being less than or equal to the first reference value, the controller is further configured to suspend adjusting the brightness of the image displayed on the display panel.

The infrared sensor detects an infrared signal transmitted from a remote controller, and based on the output of the illuminance sensor being greater than the first reference value or the output of the infrared sensor being less than the second reference value, the controller is further configured to control the display panel to perform an operation corresponding to the infrared signal transmitted from the remote controller.

The infrared sensor detects an infrared signal transmitted from a remote controller, and based on the output of the infrared sensor having a specific pattern, the controller is further configured to control the display panel to perform an operation corresponding to the infrared signal transmitted from the remote controller.

The display apparatus further includes an impact sensor. Based on an output of the impact sensor being greater than or equal to a third reference value, the output of the illuminance sensor being less than or equal to the first reference value, and the output of the infrared sensor being greater than or equal to the second reference value, the controller is further configured to control the display panel to perform an operation corresponding to a combination of the output of the impact sensor, the output of the illuminance sensor, and the output of the infrared sensor.

The controller is further configured to control the infrared transmitter to transmit infrared rays based on the output of the impact sensor being greater than or equal to the third reference value and the output of the illuminance sensor being less than or equal to the first reference value.

The impact sensor includes an acceleration sensor.

Based on the output of the illuminance sensor being greater than the first reference value or the output of the infrared sensor being less than the second reference value, and the output of the impact sensor being greater than or equal to a fourth reference value, the controller is further configured to control the display panel to perform a mirroring operation with a mobile device.

The controller is further configured to perform the mirroring operation by receiving an image signal from the mobile device adjacent to the display apparatus or transmitting an image signal to the mobile device.

The infrared transmitter transmits infrared rays in a band overlapping with a band of infrared rays transmitted by the remote controller.

The controller is further configured to generate an infrared signal including a control signal for a set-top box connected to the display apparatus, and control the infrared transmitter to transmit the infrared signal to the set-top box.

According to an embodiment, there is provided a method of controlling a display apparatus. The method includes: detecting an illuminance using an illuminance sensor; detecting infrared rays using an infrared sensor; and based on an output of the illuminance sensor being less than or equal to a first reference value and an output of the infrared sensor being greater than or equal to a second reference value, controlling a display panel to perform an operation corresponding to a combination of the output of the illuminance sensor and the output of the infrared sensor.

The display apparatus further includes: based on the output of the illuminance sensor being less than or equal to the first reference value, transmitting infrared rays, and the detecting of the infrared rays includes, based on receiving the transmitted infrared rays that are reflected from an obstacle, detecting the reflected infrared rays.

The method further includes, based on the output of the illuminance sensor being greater than the first reference value or the output of the infrared sensor being less than the second reference value, adjusting a brightness of an image displayed on the display panel based on the output of the illuminance sensor.

The detecting of the infrared rays further includes detecting an infrared signal transmitted from a remote controller, and the method further includes, based on the output of the illuminance sensor being greater than the first reference value or the output of the infrared sensor being less than the second reference value, controlling the display panel to perform an operation corresponding to the infrared signal transmitted from the remote controller.

The detecting of the infrared rays further includes detecting an infrared signal transmitted from a remote controller, and the method further includes, based on the output of the infrared sensor having a specific pattern, controlling the display panel to perform an operation corresponding to the infrared signal transmitted from the remote controller.

The method further includes detecting an impact applied to the display apparatus using an impact sensor, and based on an output of the impact sensor being greater than or equal to a third reference value, the output of the illuminance sensor being less than or equal to the first reference value, and the output of the infrared sensor being greater than or equal to the second reference value, controlling the display panel to perform an operation corresponding to a combination of the output of the impact sensor, the output of the illuminance sensor, and the output of the infrared sensor.

### BRIEF DESCRIPTION OF THE DRAWINGS

The above aspects, features, and advantages of certain embodiments of the disclosure will be more apparent from the following description taken in conjunction with the accompanying drawings, in which:
FIG. 1 is an external view illustrating an example of a display apparatus according to an embodiment;
FIG. 2 is a control block diagram illustrating a display apparatus according to an embodiment;
FIG. 3 is a diagram illustrating an example of an operation in which a command is input by a user through a display apparatus according to an embodiment;
FIG. 4 is a graph showing an output of an illuminance sensor in response to an input being provided as in the example of FIG. 3;
FIG. 5 is a graph showing an output of an infrared sensor in response to an input being provided as in the example of FIG. 3;
FIG. 6 is a diagram illustrating an example in which a display apparatus receives a signal from a remote controller according to an embodiment;
FIG. 7 is a diagram illustrating an example of an infrared signal transmitted from a remote controller of a display apparatus according to an embodiment;
FIG. 8 is a control block diagram illustrating a display apparatus including an infrared transmitter according to an embodiment;
FIG. 9 is a graph showing reflectance for each infrared band;
FIG. 10 is a diagram illustrating an example in which a display apparatus is connected to a set-top box according to an embodiment;
FIG. 11 is a control block diagram illustrating a display apparatus in which a user's touch input is detected using an impact sensor according to an embodiment;
FIG. 12 is a graph showing an example of an output of an impact sensor;
FIG. 13 is a control block diagram illustrating a display apparatus in which a user touch input is detected using an impact sensor and an infrared transmitter according to an embodiment;
FIG. 14 is a control block diagram illustrating a display apparatus in which a user touch input is detected using an impact sensor, an infrared transmitter and an illuminance sensor according to an embodiment;
FIG. 15 is a control block diagram illustrating a display apparatus in which a user touch input is detected using an illuminance sensor, an impact sensor, an infrared sensor, and an infrared transmitter according to an embodiment;
FIG. 16 is a diagram illustrating an operation of an impact sensor of a display apparatus according to an embodiment;
FIG. 17 is a control block diagram illustrating a display apparatus including a communicator according to an embodiment;
FIG. 18 is a flowchart showing a method of controlling a display apparatus according to an embodiment;
FIG. 19 is a flowchart showing a method of controlling a display apparatus in which the display apparatus transmits infrared rays according to an embodiment;
FIG. 20 is a flowchart showing a method of controlling a display apparatus in which an impact applied to the display apparatus is detected according to an embodiment;
FIG. 21 is a flowchart showing a method of controlling a display apparatus in which an impact applied to the display apparatus is detected and infrared rays are transmitted according to an embodiment;
FIG. 22 is a flowchart showing a method of controlling a display apparatus in which an impact applied to the display apparatus, an illuminance, and infrared rays are detected according to an embodiment; and
FIG. 23 is a flowchart showing a method of controlling a display apparatus in which an impact applied to the display apparatus and an illuminance are detected, infrared rays are transmitted, and infrared rays are detected according to an embodiment.

### DETAILED DESCRIPTION

Like numerals refer to like elements throughout the disclosure. Not all elements of embodiments of the present disclosure will be described in detail, and description of what are commonly known in the art or overlapping descriptions will be omitted. The terms as used throughout the disclosure, such as "- part", "- module", "~ member", "- block", etc., may be implemented in software and/or hardware, and a plurality of "- parts", "- modules", "- members", or "~ blocks" may be implemented in a single element, or a single "- part", "- module", "- member", or "~ block" may include a plurality of elements.

It will be further understood that the term "connect" or its derivatives may refer to direct and indirect connection, and the indirect connection may include a connection over a wireless communication network.

It will be understood that the terms "comprises" and/or "comprising," specify the presence of stated features, integers, steps, operations, elements, and/or components, but do not preclude the presence or addition of one or more other features, integers, steps, operations, elements.

Throughout the disclosure, when "an element" is referred to as controlling "another element", it does not only refer to a case where the element directly controls the other element, but also a case where the control is performed through another element provided between the element and the other element. In this case, signals transmitted between the elements may be different from each other.

Further, it will be further understood that when a signal or data is transferred, sent or transmitted from "an element" to "another element", it does not exclude another element between the element and the other element passed by the signal or data therethrough, unless the context clearly indicates otherwise, and modifications may be made in the shape of the transmitted signal or data.

As used herein, the singular forms "a," "an" and "the" are intended to include the plural forms as well, unless the context clearly indicates otherwise.

Although the terms "first," "second," "A," "B," etc. may be used to describe components, pieces of information, or values, the terms do not limit the order of the components, pieces of information, or values.

Reference numerals used for method steps are only used for convenience of explanation, and should not be construed as limiting an order of the steps. Thus, unless the context clearly dictates otherwise, the written order may be practiced otherwise.

Hereinafter, embodiments of a display apparatus and a method of controlling the same will be described in detail with reference to the accompanying drawings.

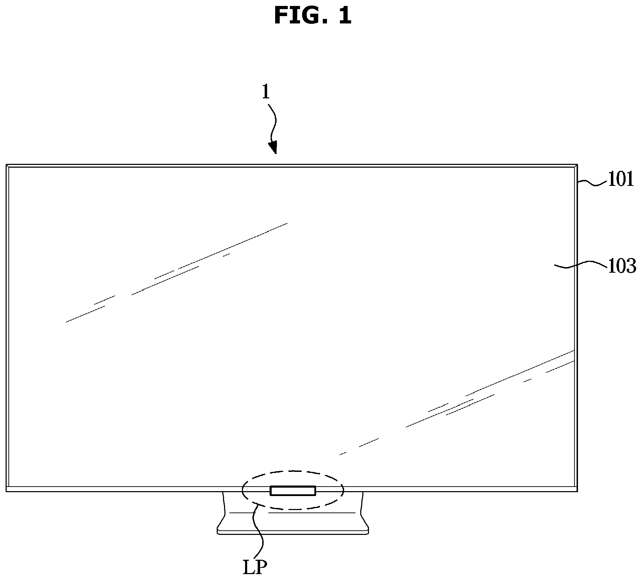

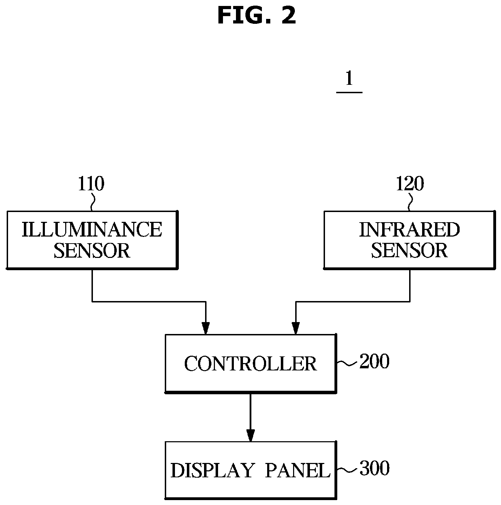

FIG. 1 is an external view illustrating an example of a display apparatus according to an embodiment, and FIG. 2 is a control block diagram illustrating a display apparatus according to an embodiment.

The display apparatus according to one or more embodiments may be one of various display apparatuses that display an image, such as a television (TV), a computer monitor, and a signage. However, the one or more embodiments are not limited thereto, and may include any other types of display apparatus. For the sake of description, the following description will be made with an example of a TV as the display apparatus.

Referring to FIG. 1, a display apparatus 1 according to an embodiment may include a main body 101 having various components mounted therein and a screen 103 that displays an image.

The main body 101 may include some or all components described below, and the screen 103 may correspond to an area of a display panel (300 in FIG. 2) in which an image is output. The display panel will be described in more detail below.

The main body 101 may include a plurality of sensors serving as an input device in at least one region of the main body 101. As an example, the plurality of sensors may be provided in a lower region LP of the main body 101 as shown in FIG. 1. All of the plurality of sensors may be provided in the lower region LP of the main body 101, or some of the plurality of sensors may be provided in other regions of the main body 101.

The main body 101 may have a product logo formed in the lower region LP. The plurality of sensors may be disposed on a rear surface of the product logo, and the plurality of sensors may detect a movement of a user, for example, a user approaching the product logo, or a user who performs an operation on the product logo, such as touching the product logo. Details thereof will be described below.

As another example, the main body 101 may include the plurality of sensors in an upper region of the main body 101, or may include the plurality of sensors in a left end region or a right end region of the main body 101. However, some of the plurality of sensors may be provided in other regions. In addition, even for a region without a product logo, a user may be guided to input a command through the region using various methods.

Referring to FIG. 2, the display apparatus 1 may include an illuminance sensor 110, an infrared sensor 120, and a controller 200 configured to perform an operation corresponding to an output of the illuminance sensor 110 and an output of the infrared sensor 120 in response to the output of the illuminance sensor 110 being less than or equal to a first reference value, and the output of the infrared sensor 120 being greater than or equal to a second reference value.

In addition, the display apparatus 1 may include the display panel 300 that displays an image. The display panel 300 may be implemented as one of various types of display panels, such as a light emission diode (LED) display panel, an organic light emission diode (OLED) display panel, and a quantum dot light emission diode (QLED) display panel. Depending on the type of the display panel 300, a backlight unit may or may not be included in the display apparatus 1.

The illuminance sensor 110 may output a value indicating a brightness of light incident on the illuminance sensor 110. The illuminance sensor 110 may be provided in the main body 101 of the display apparatus 1 to detect the brightness of a space surrounding the display apparatus 1.

The illuminance sensor 110 may detect the brightness in real time, periodically, or based on a trigger signal being input.

When the illuminance sensor 110 is covered by an obstacle, the output of the illuminance sensor 110 decreases. Therefore, when the user covers the illuminance sensor 110 using a body part, such as a hand, the output of the illuminance sensor 110 decreases, and the controller 200 may determine whether a touch by a user is input on the basis of the output of the illuminance sensor 110.

The infrared sensor 120 may output a value indicating an intensity of infrared rays incident on the infrared sensor 120. The infrared sensor 120 may be provided in the main body 101 of the display apparatus 1 to detect the intensity of infrared rays incident on the display apparatus 1.

In the embodiment illustrated in FIG. 2, when a certain component is be referred to as being provided in the main body 101 of the display apparatus 1, it should be understood that the component may be included or mounted on the main body 101, the component is exposed to the outside, or the component is provided as a separate module and coupled to the main body 101. The component is considered as being provided in the main body 101 as long as the component is directly or indirectly connected to the main body 101.

The illuminance sensor 110 may detect the brightness of light or may detect the color of light. When detecting the color of light, the illuminance sensor 110 may be referred to as a color sensor or an RGB sensor. That is, in the embodiment illustrated in FIG. 2, the illuminance sensor 110 does not only refer to a sensor that detects only illuminance, but also includes a range of sensors capable of detecting additional features besides illuminance, as long as it can detect illuminance.

When the illuminance sensor 110 is implemented as a color sensor, the illuminance sensor 110 may also detect infrared rays. Therefore, in this case, the illuminance sensor 110 may even perform the operation of the infrared sensor 120. That is, the illuminance sensor 110 and the infrared sensor 120 are considered as being integrated into one structure.

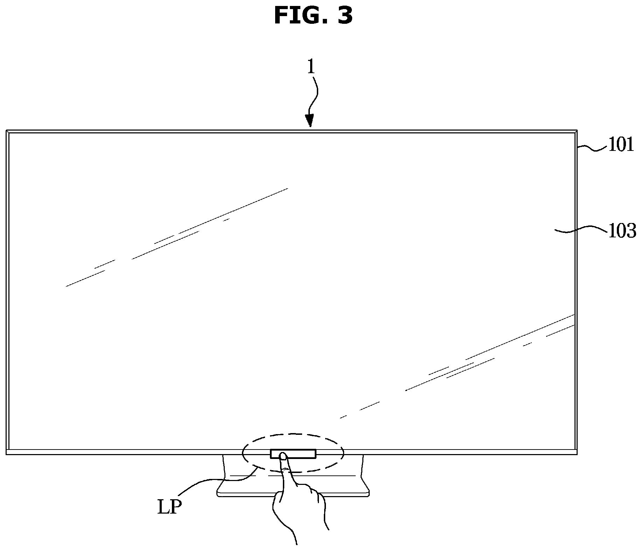

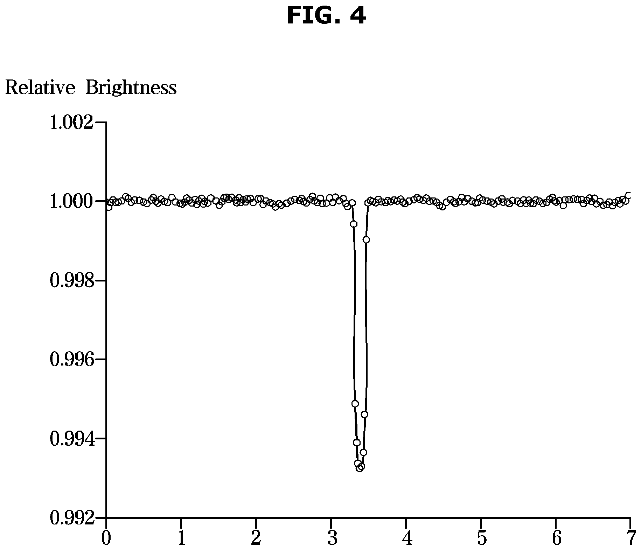

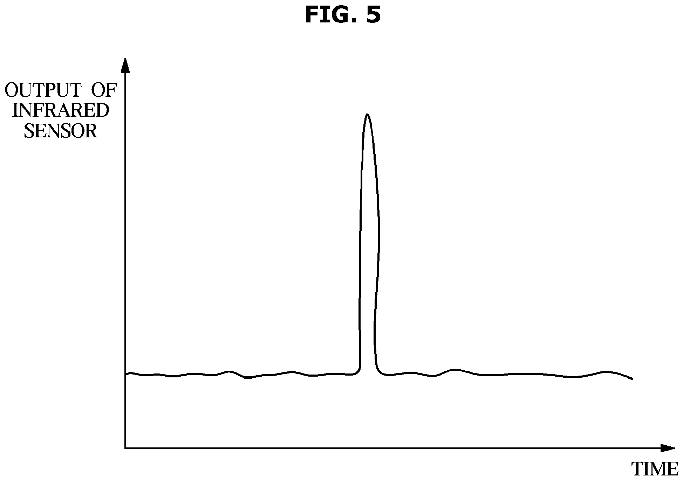

FIG. 3 is a diagram illustrating an example of an operation in which a command is input by a user through a display apparatus according to an embodiment; FIG. 4 is a graph showing an output of an illuminance sensor in response to an input being provided as in the example of FIG. 3; and FIG. 5 is a graph showing an output of an infrared sensor in response to an input being provided as in the example of FIG. 3.

Referring to FIG. 3, the user may touch the lower region LP of the main body 101, in which the illuminance sensor 110 and the infrared sensor 120 are provided, with a finger to input a command for controlling the display apparatus 1. When a logo is provided in the lower region LP of the main body 101, the illuminance sensor 110 and the infrared sensor 120 may be disposed on the rear side of the logo, and the user may touch the logo. That is, through the logo, the user may easily identify a part to be touched.

When the user covers the illuminance sensor 110, the amount of light incident on the illuminance sensor 110 decreases, and the output of the illuminance sensor 110 decreases. When the output of the illuminance sensor 110 is expressed as a relative brightness, the relative brightness rapidly decreases to a value close to zero in response to a touch by the user, as shown in FIG. 4.

The upper limit value of the output of the illuminance sensor 110, which is a value representing that the illuminance sensor 110 is cover by an obstacle, such as a user's hand, may be set as the first reference value and stored in a memory that is accessible by the controller 200. The first reference value may be determined by experiment, statistics, theory, simulation, or the like.

Moreover, even when the illuminance of the space in which the display apparatus 1 is located is low, there is a difference in outputs of the illuminance sensor 110 in each case when the illuminance sensor 110 is covered by an obstacle or when the illuminance sensor 110 is not covered by an obstacle. The first reference value may be set to a value capable of identifying a user touch even when the illumination of the space in which the display apparatus 1 is located is low.

A human body emits infrared rays. Therefore, when a hand of a user touches the lower region LP of the main body 101, in which the illuminance sensor 110 and the infrared sensor 120 are provided, the output of the infrared sensor 120 rapidly increases as shown in FIG. 5.

The lower limit value of the output of the infrared sensor 120, which is a value indicating that a part of the human body, such as a user's hand, is touching the infrared sensor 120, may be set as the second reference value and stored in the memory accessible by the controller 200. The second reference value may be determined by experiment, statistics, theory, simulation, or the like.

In response to the output of the illuminance sensor 110 being less than or equal to the first reference value, and the output of the infrared sensor 120 being greater than or equal to the second reference value, it may be determined that the user has touched the region where the illuminance sensor 110 and the infrared sensor 120 are provided. By considering the output of the infrared sensor 120 together with the output of the illuminance sensor 110, a contact by other obstacles that are not a physical touch by a user may be excluded.

Therefore, in response to the output of the illuminance sensor 110 being less than or equal to the first reference value, and the output of the infrared sensor 120 being greater than or equal to the second reference value, the controller 200 may perform an operation corresponding to the combination of the output of the illuminance sensor 110 and the output of the infrared sensor 120. By using the illuminance sensor 110 and the infrared sensor 120 as a user input device, a button-type input device may be omitted, the number of button-type input devices may be reduced, the manufacturing cost and the complexity of the manufacturing process may be reduced, and/or the possibility of damage to the input device may be reduced.

To this end, an operation corresponding to a combination of the output of the illuminance sensor 110 and the output of the infrared sensor 120 may be stored in the memory accessible by the controller 200 in advance. The output of the illuminance sensor 110 and the output of the infrared sensor 120 may have a plurality of combinations for each action of a user. Accordingly, a plurality of operations corresponding respectively to the plurality of combinations may be stored in advance in the controller 200.

For example, the action by the user may include at least one type of action among one or more taps, a long touch, and a slide. That is, the action by the user may include: one or more taps; a long touch; a slide; one or more taps and a long touch; one or more taps and a slide; a long touch and a slide; or one or more taps, a long touch, and a slide.

Since the combination of the output of the illuminance sensor and the output of the infrared sensor varies according to the user's action, the controller 200 may acquire the combination of the outputs in advance, and may store each operation corresponding to the combination of the output of the illuminance sensor 110 and the output of the infrared sensor 120 for each user's action in advance.

The operation of the display apparatus 1 corresponding to the sensor output may include at least one type of operation among power on/off, volume control, channel change, and display setting. That is, the operation of the display apparatus 1 performed in response to the user's action may include: power on/off; volume control; channel change; or display setting. In addition, for example, a combination of operations of the display apparatus 1 may be performed in response to the user's action and may include: power on/off and volume control; power on/off and channel change; power on/off and display setting; volume control and channel change; volume control and display setting; or channel change and display settings. Alternatively, the operation of the display apparatus 1 performed in response to the user's action may include: power on/off, volume control, and channel change; power on/off, volume control, and display setting; or volume control, channel change, and display setting. Alternatively, the operation of the display apparatus 1 performed in response to the user's action may include all of power on/off, volume control, channel change, and display setting.

The controller 200 may sequentially monitor the output of the illuminance sensor 110 and the output of the infrared sensor 120, or may simultaneously monitor the output of the illuminance sensor 110 and the output of the infrared sensor 120. Here, the monitoring may refer to a determination process of comparing an output of a sensor with a reference value.

As an example of sequential monitoring, in response to an output of the illuminance sensor 110 decreasing to a value less than or equal to the first reference value during monitoring of the output of the illuminance sensor 110, the output of the infrared sensor 120 may be monitored. In this case, in response to the output of the infrared sensor 120 being greater than or equal to the second reference value, it may be determined that a touch by a user has been performed, and the controller 200 may perform an operation corresponding to the combination of the outputs of the illuminance sensor 110 and the infrared sensor 120.

Conversely, in response to the output of the infrared sensor 120 increasing to a value greater than or equal to the second reference value during monitoring of the output of the infrared sensor 120, the output of the illuminance sensor 110 may be monitored. In this case, in response to the output of the illuminance sensor 110 being less than or equal to the first reference value, it may be determined that a touch by a user has been performed, and the controller 200 may perform an operation corresponding to the combination of the outputs of the illuminance sensor 110 and the infrared sensor 120.

The controller 200 may include at least one memory 210 for storing a program that performs the above-described operation and an operation described below and various data required to execute the program, and at least one processor 220 that executes the stored program. The memory 210 and the processor 220 may be integrated into one chip or may be physically separated from each other.

In addition, when the controller 200 includes a plurality of memories 210, the plurality of memories 210 may be integrated into a single chip, or some of the plurality of memories 210 may be physically separated from each other.

In addition, when the controller 200 includes a plurality of the processors 220, the plurality of processors 220 may be integrated into a single chip, or some of the plurality of processors 220 may be physically separated from each other.

The controller 200 may be provided in the main body 101. For example, the controller 200 may be provided on the rear surface of the main body 101. When the controller 200 is provided on the rear surface of the main body 101 and the illuminance sensor 110 and the infrared sensor 120 are provided on the lower end of the main body 101, the outputs of the illuminance sensor 110 and the infrared sensor 120 may be transmitted to the controller 200 through a cable.

The controller 200 may perform not only an operation corresponding to a user's action on the basis of the outputs of the illuminance sensor 110 and the infrared sensor 120, but also a different operation for controlling the display apparatus 1, such as controlling the display panel 300.

In addition, the controller 200 may perform different operations for controlling the display apparatus 1 on the basis of the output of the illuminance sensor 110 or the infrared sensor 120.

For example, when one of the two conditions for determining a touch input by a user (e.g., the output of the illuminance sensor less than or equal to the first reference value, and the output of the infrared sensor greater than or equal to the second reference value) is not satisfied, the controller 200 may adjust the brightness of an image displayed on the display panel 300 on the basis of the output of the illuminance sensor 110. In other words, in response the output of the illuminance sensor 110 being greater than the first reference value or the output of the infrared sensor 120 being less than the second reference value, the controller 200 may adjust the brightness of an image displayed on the display panel 300 on the basis of the output of the illuminance sensor 110.

For example, the controller 200 may adjust the brightness of the image displayed on the display panel 300 to be brighter as the output of the illuminance sensor 110 increases, and to be dimmer as the output of the illuminance sensor 110 decreases. Accordingly, the image may be provided with an optimized brightness according to the surrounding environment, and the power consumption may be minimized.

The controller 200 may control the display panel 300 or the backlight unit in order to adjust the brightness of the image displayed on the display panel 300.

As described above, when the illuminance sensor 110 is covered by an obstacle, the amount of light incident on the illuminance sensor 110 may be reduced, or in some cases almost zero. Accordingly, the illuminance sensor 100 may have an output value lower than a value obtained when the surrounding environment of the display apparatus 1 is dark. Therefore, even in a state in which the output of the infrared sensor 120 is less than the second reference value, if the output 110 of the illuminance sensor is less than or equal to the first reference value, the brightness adjustment based on the output of the illuminance sensor 110 may be suspended. Accordingly, the brightness of the image may not be adjusted to be dimmer when the illuminance sensor 110 is covered by an obstacle.

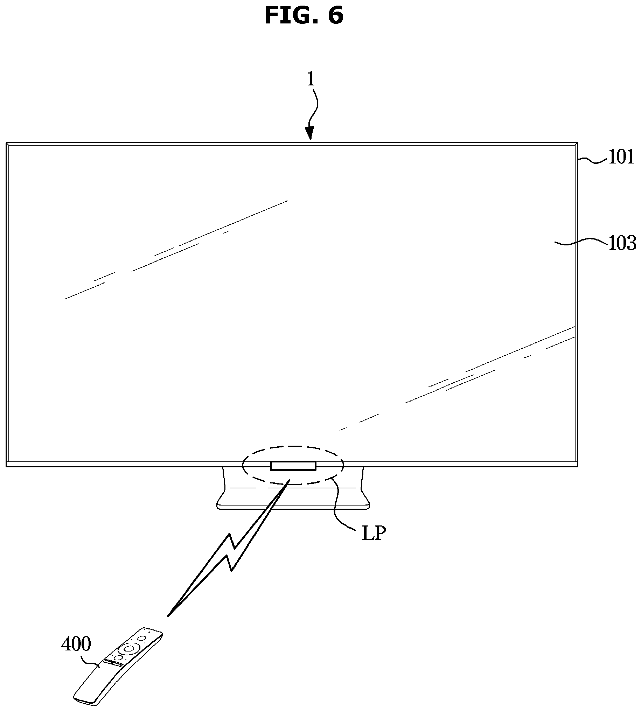

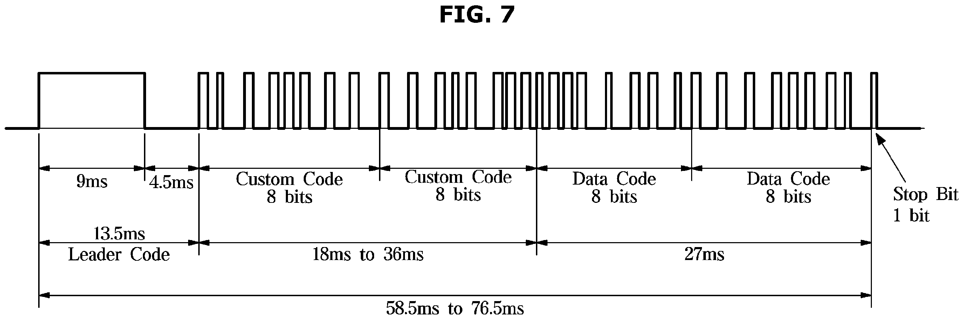

FIG. 6 is a diagram illustrating an example in which a display apparatus receives a signal from a remote controller according to an embodiment, and FIG. 7 is a diagram illustrating an example of an infrared signal transmitted from a remote controller of a display apparatus according to an embodiment.

Referring to FIG. 6, the display apparatus 1 according to an embodiment may include a remote controller 400 for remotely receiving a command from a user.

The remote controller 400 may generate an infrared signal corresponding to an input by a user and transmit the generated infrared signal to the main body 101 of the display apparatus 1, and the infrared sensor 120 of the main body 101 may detect the infrared signal.

The controller 200 may perform an operation corresponding to the infrared signal detected by the infrared sensor 120. For example, the operation corresponding to the infrared signal may include at least one type of operation among power on/off, channel change, volume adjustment, and screen adjustment.

For example, the remote controller 400 may generate an infrared signal having a pattern as shown in FIG. 7, and transmit the infrared signal. Infrared signals of different patterns may be generated according to a command input by a user to the remote controller 400.

In response to the output of the illuminance sensor 110 being less than or equal to the first reference value and the output of the infrared sensor 120 being greater than or equal to the second reference value, the controller 200 may perform an operation corresponding to the combination of the output of the illuminance sensor 110 and the output of the infrared sensor 120. In addition, in response to the output of the illuminance sensor 110 being greater than the first reference value or the output of the infrared sensor 120 being less than the second reference value, the controller 200 may perform an operation corresponding to the infrared signal received by the infrared sensor 120.

However, even if the output of the illuminance sensor 110 is less than the first reference value and the output of the infrared sensor 120 is greater than the second reference value, the controller 200 may, in response to the output of the infrared sensor 120 having a specific pattern of the infrared signal transmitted from the remote controller 400, determine that the infrared signal is transmitted from the remote controller 400 and perform an operation corresponding to the infrared signal transmitted from the remote controller 400. Accordingly, when the illuminance sensor 110 is covered by an obstacle, a command input through the remote controller 400 may be prevented from being misrecognized and used as a command input instead of a touch input by a user.

Such a configuration described above may not only determine a touch input by a user using the illuminance sensor 110 and the infrared sensor 120, but also adjust the brightness of the image using the illuminance sensor 110 and the infrared sensor 120, and may further detect an infrared signal transmitted from the remote controller 400 using the infrared sensor 120, thereby reducing the manufacturing cost and improving the usability of a sensor provided in the display apparatus 1.

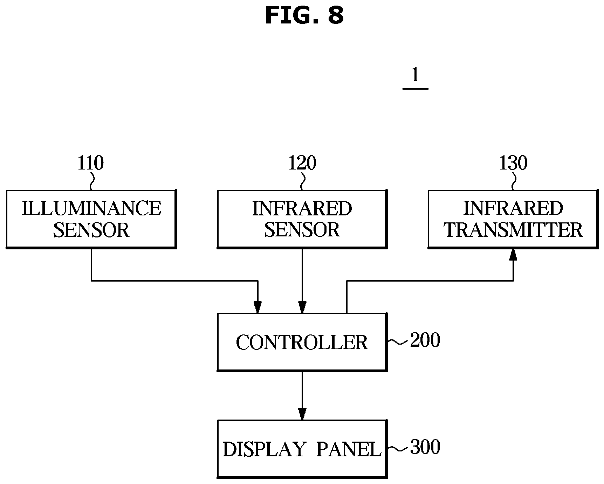

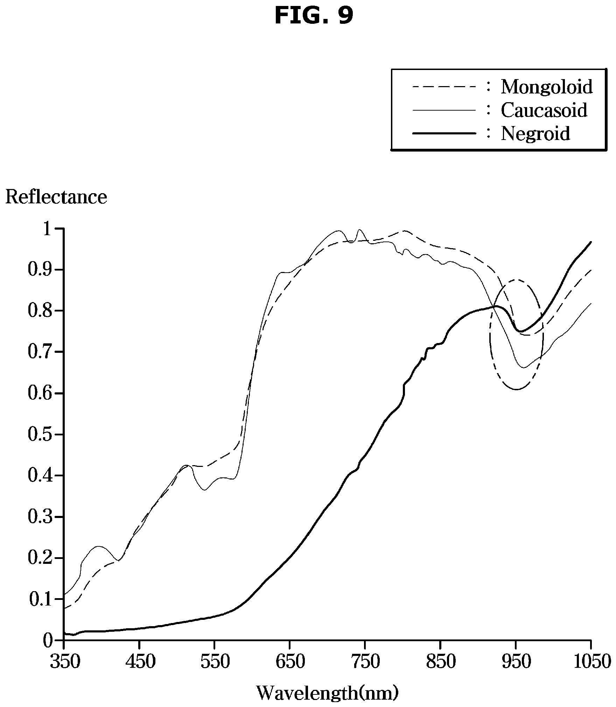

FIG. 8 is a control block diagram illustrating a display apparatus which further includes an infrared transmitter according to an embodiment, and FIG. 9 is a graph showing reflectance for each infrared band.

Referring to FIG. 8, the display apparatus 1 according to the embodiment may further include an infrared transmitter 130 that emits infrared rays.

When the display apparatus 1 includes the infrared transmitter 130, the controller 200 may control the infrared transmitter 130 to transmit infrared rays, and in response to detecting the infrared rays being reflected from an obstacle and returning to the infrared sensor 120, determine that a touch by a user has been performed on the basis of an output of the infrared sensor 120.

Specifically, in response to the output of the illuminance sensor 110 being less than or equal to the first reference value, the controller 200 may control the infrared transmitter 130 to transmit infrared rays. The infrared transmitter 130 may transmit infrared rays of a specific band, and when the infrared rays transmitted from the infrared transmitter 130 are returned after being reflected from an obstacle, the infrared sensor 120 may detect the reflected infrared rays.

The reflectance of infrared rays may vary depending on the type of the obstacle. The reflectance of infrared rays also may vary depending on whether the obstacle is a human body or an object. In the case of a human body, the reflectance of the infrared rays may vary depending on the skin color of the human body. In addition, the reflectance of infrared rays may vary depending on the wavelength band of infrared rays.

FIG. 9 shows a graph of reflectance obtained by transmitting electromagnetic waves in wavelength bands of 350nm to 1050nm toward a Mongoloid, a Caucasoid, and a Negroid and detecting infrared rays of the electromagnetic waves reflected by the Mongoloid, the Caucasoid, and the Negroid.

Referring to the graph of FIG. 9, it can be seen that the reflectance values of infrared rays in a wavelength band of 920 nm to 950 nm are similar regardless of the skin color. Accordingly, the infrared transmitter 130 may transmit infrared rays in a band of 920 nm to 950 nm, for example, infrared rays in a spectrum having a peak in a band of around 940 nm. Accordingly, an error in the determination result due to a difference in skin colors of the users may be reduced.

In addition, since the band overlaps the band of the infrared signals transmitted from the remote controller 400, when the infrared transmitter 130 transmits infrared rays in a band of 920nm to 950nm, an infrared sensor for determining a touch input by a user and an infrared sensor for receiving an infrared signal from the remote controller 400 do not need to be separately provided, thereby increasing the utilization of parts and reducing the manufacturing costs.

The lower limit value of the output of the infrared sensor 120, which is considered a value representing that infrared rays are reflected from a human body, may be set as a second reference value and stored in a memory of the controller 200. The second reference value may be determined by experiment, statistics, theory, simulation, or the like. The second reference value at a time of reception of infrared rays received by the infrared sensor 120 that are reflected from the human body may be different from the above described second reference value at a time of reception of infrared rays received by the infrared sensor 120 that are emitted from the human body.

In response to the output of the infrared sensor 120 being greater than or equal to the second reference value, the controller 200 may perform an operation corresponding to the combination of the output of the illuminance sensor 110 and the output of the infrared sensor 120. As a result, the detection result is provided with higher accuracy compared to detecting infrared rays emitted from the human body.

That is, when the infrared transmitter 130 is provided in the display apparatus 1, the controller 200 may, in response to the output of the illuminance sensor 110 being less than or equal to the first reference value, controls the infrared transmitter 130 to transmit infrared rays of a specific band, and the infrared sensor 120 may detect the infrared rays returning after being reflected from an obstacle. In response to the output of the infrared sensor 120 being greater than or equal to the second reference value, it is determined that a touch input from a user is received by the infrared sensor 120. Accordingly, in response to the output of the infrared sensor 120 being greater than or equal to the second reference value, the controller 200 may perform an operation corresponding to the combination of the output of the illuminance sensor 110 and the output of the infrared sensor 120.

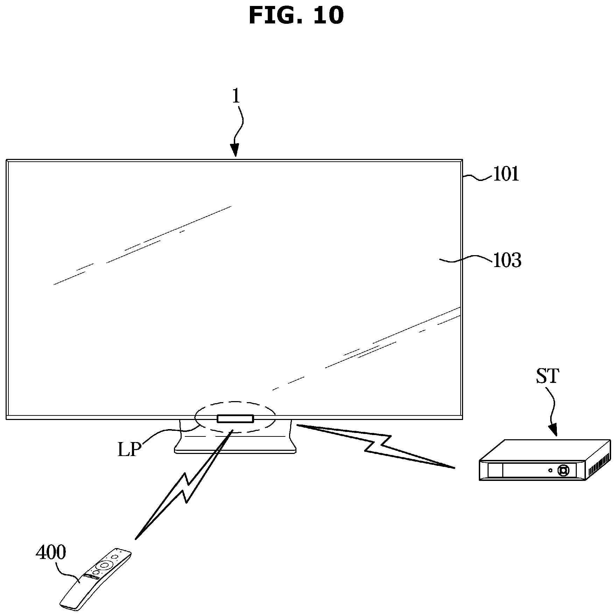

FIG. 10 is a diagram illustrating an example in which a display apparatus is connected to a set-top box according to an embodiment.

Referring to FIG. 10, the display apparatus 1 may be connected to a set-top box ST in a wired or wireless manner to receive multimedia contents. The controller 200 may generate an infrared signal including a control signal for the set-top box ST connected to the display apparatus 1, and control the infrared transmitter 130 to transmit the generated infrared signal to the set-top box ST.

As a specific example, when a command for channel change is input through the remote controller 400 of the display apparatus 1, the remote controller 400 may generate an infrared signal including the input command and transmit the generated infrared signal, and the infrared sensor 120 may detect the infrared signal transmitted from the remote controller 400.

The controller 200 may determine a command corresponding to the infrared signal detected by the infrared sensor 120 and generate an infrared signal including the determined command. The controller 200 may control the infrared transmitter 130 to transmit the generated infrared signal to the set-top box ST, and the set-top box ST may receive the infrared signal transmitted from the infrared transmitter 130 and change the channel corresponding to the received infrared signal.

That is, the infrared transmitter 130 provided in the display apparatus 1 may be used to detect a touch by a user, or to transmit a control signal to the set-top box ST, thereby increasing the utilization of parts and reducing the manufacturing cost.

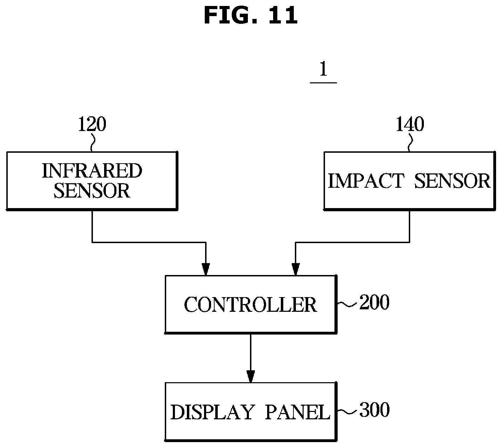

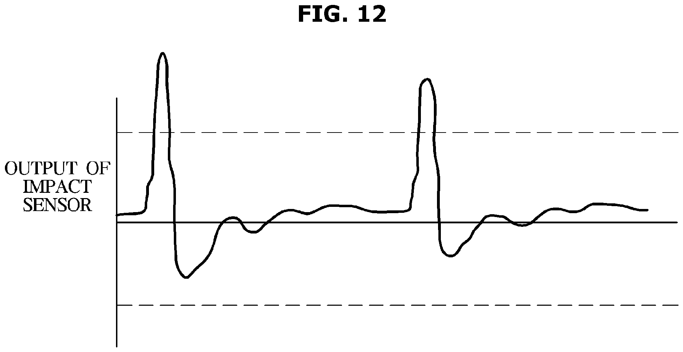

FIG. 11 is a control block diagram illustrating a display apparatus when a user's touch is detected using an impact sensor according to an embodiment, and FIG. 12 is a graph showing an example of an output of an impact sensor.

Referring to FIG. 11, the display apparatus 1 according to an embodiment may further include an impact sensor 140. The impact sensor 140 may be provided in the main body 101 of the display apparatus 1 to detect an impact applied to the main body 101. For example, the impact sensor 140 may be implemented as an acceleration sensor.

When the user touches the display apparatus 1, an impact occurs in the display apparatus 1 and the impact sensor 140 may detect the impact. The impact sensor 140 may be provided on the lower region LP of the main body 101 or on the rear surface of the logo together with the infrared sensor 120, but the embodiment of display apparatus 1 is not limited thereto. The impact sensor 140 may be provided in another region of the main body 101, and even when a region touched by the user is spaced apart from a region where the impact sensor 140 is located, the impact sensor 140 may detect an impact applied to the display apparatus 1 by a user touch.

FIG. 12 is a graph showing the output of the impact sensor 140 when a user touches the display apparatus 1 provided with the impact sensor 140. Referring to FIG. 12, when a user touches the display apparatus 1, the output of the impact sensor 140 rapidly increases.

The lower limit value of the output of the impact sensor 140, which is considered a value indicating that a user has touched the display apparatus 1, may be set as a third reference value and stored in a memory of the controller 200. The third reference value may be determined by experiment, statistics, theory, simulation, or the like.

When the impact sensor 140 is provided in the display apparatus 1, the controller 200 may determine whether a user touch using the output of the impact sensor 140 and the output of the infrared sensor 120.

For example, in response to the output of the infrared sensor 120 being greater than or equal to the second reference value and the output of the impact sensor 140 being greater than or equal to the third reference value, the controller 200 may determine that a touch by a user has been performed, and may perform an operation corresponding to the combination of the output of the infrared sensor 120 and the output of the impact sensor 140.

When the impact sensor 140 is implemented as an acceleration sensor, the controller 200 may compare the absolute value of the impact sensor 140 with the third reference value.

The output of the infrared sensor 120 and the output of the impact sensor 140 may be sequentially compared with the second reference value and the third reference value, respectively, or may be compared simultaneously. For example, the controller 200 may compare the output of the impact sensor 140 with the third reference value. In response to the output of the impact sensor 140 being greater than or equal to the third reference value, the controller 200 may then compare the output of the infrared sensor 120 with the second reference value. In response to the output of the infrared sensor 120 being greater than or equal to the second reference value, the controller 200 may determine that a touch by a user is input and perform an operation corresponding to the touch by the user. By using the output of the infrared sensor 120 together with the output of the impact sensor 140, an impact applied to the display apparatus 1 by an obstacle, which is not a user, and an impact applied to the display apparatus 1 by a user touch may be distinguished from each other.

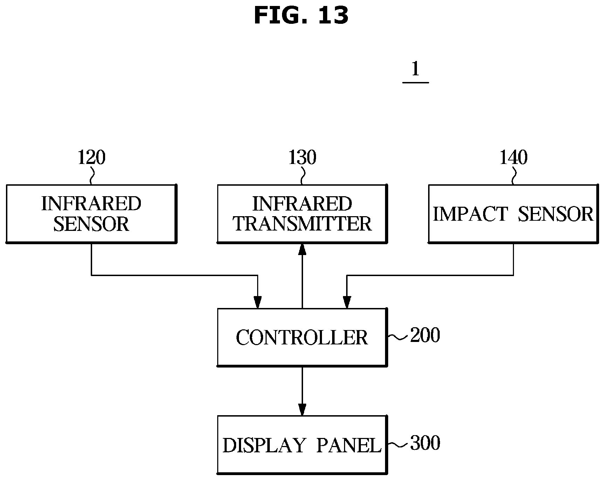

FIG. 13 is a control block diagram illustrating a display apparatus in which a user touch is detected using an impact sensor and an infrared transmitter according to an embodiment.

Referring to FIG. 13, even when the display apparatus 1 includes the impact sensor 140, the display apparatus 1 may further include an infrared transmitter 130 according to an embodiment.

In response to the output of the impact sensor 140 being greater than or equal to the third reference value, the controller 200 may control the infrared transmitter 130 to transmit infrared rays, and the infrared sensor 120 may detect the infrared rays returning after being reflected from an obstacle. As described above, the infrared transmitter 130 may transmit infrared rays of a specific band, and when the infrared rays reflect from a human body, the infrared rays may be reflected with a reflectance higher than or equal to a certain level. Accordingly, in response to the output of the infrared sensor 120 being greater than or equal to the second reference value, the controller 200 may determine that a touch by a user is input, and perform an operation corresponding to the combination of the output of the impact sensor 140 and the output of the infrared sensor 120.

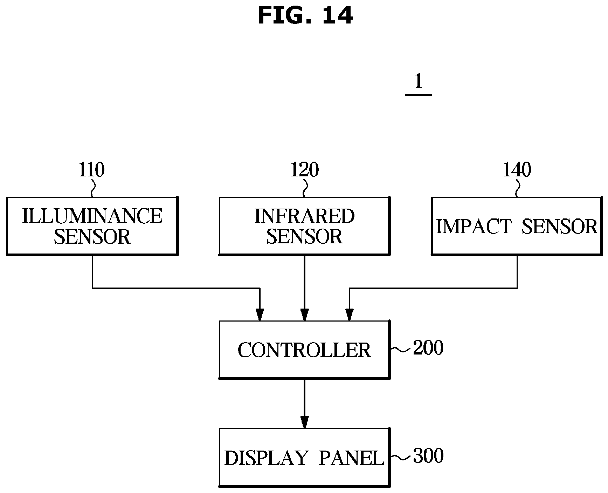

FIG. 14 is a control block diagram illustrating a display apparatus in which a user touch is detected using an impact sensor, an infrared transmitter, and an illuminance sensor according to an embodiment.

Referring to FIG. 14, the display apparatus 1 may include the illuminance sensor 110, the infrared sensor 120, and the impact sensor 140 described above.

In this case, in response to the output of the illuminance sensor 110 being less than or equal to the first reference value, the output of the impact sensor 140 being greater than or equal to the third reference value, and the output of the infrared sensor 120 being greater than or equal to the second reference value, the controller 200 may perform an operation corresponding to the combination of the output of the illuminance sensor 110, the output of the impact sensor 140, and the output of the infrared sensor 120 .

The controller 200 may sequentially or simultaneously compare the output of the illuminance sensor 110, the output of the impact sensor 140, and the output of the infrared sensor 120 with respective reference values.

For example, the controller 200 may first compare the output of the impact sensor 140 with the third reference value, and in response to the output of the impact sensor 140 being greater than or equal to the third reference value, the controller 200 may compare the output of the illuminance sensor 110 with the first reference value. In response to the output of the illuminance sensor 110 being less than or equal to the first reference value, the controller 200 may compare the output of the infrared sensor 120 with the second reference value, and in response to the output of the infrared sensor 120 being greater than or equal to the second reference value, the controller 200 may determine that a touch by a user is input and perform an operation corresponding to the combination of the output of the illuminance sensor 110, the output of the impact sensor 140, and the output of the infrared sensor 120.

Alternatively, the controller 200 may first compare the output of the illuminance sensor 110 with the first reference value, and in response to the output of the illuminance sensor 110 being less than or equal to the first reference value, the controller 200 may compare the output of the impact sensor 140 with the third reference value. In response to the output of the impact sensor 140 being greater than or equal to the third reference value, the controller 200 may compare the output of the infrared sensor 120 with the second reference value, and in response to the output of the infrared sensor 120 being greater than or equal to the second reference value, the controller 200 may determine that a touch by a user is input, and perform an operation corresponding to the combination of the output of the illuminance sensor 110, the output of the impact sensor 140, and the output of the infrared sensor 120.

The illuminance sensor 110, the infrared sensor 120, and the impact sensor 140 may be turned on at all times or may be turned on in response to a trigger signal being input while in a standby mode in consideration of the power consumption.

For example, the illuminance sensor 110 and the infrared sensor 120, which consume small power, may be turned on at all times, and the impact sensor 140. Alternatively, the sensors that consume relatively large power, may be in a standby mode, and in response to an impact having equal to or higher than a certain level being applied, they may be turned on.

Alternatively, when sequentially determining the sensor outputs, the sensor may be turned on in the order of the determinations. For example, when the output of the illuminance sensor 110 is first determined, the impact sensor 140 may be turned on in response to the output of the illuminance sensor 110 being less than the first reference value, and when the output of the impact sensor 140 is first determined, the illuminance sensor 110 may be turned on in response to the output of the impact sensor 140 being greater than or equal to the third reference value.

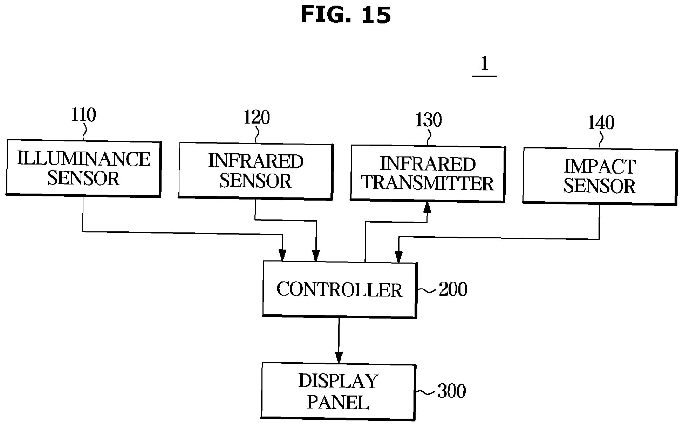

FIG. 15 is a control block diagram illustrating a display apparatus in which a user touch is detected using an illuminance sensor, an impact sensor, an infrared sensor, and an infrared transmitter according to an embodiment.

Referring to FIG. 15, the display apparatus 1 according to an embodiment may include all of the illuminance sensor 110, the impact sensor 140, the infrared sensor 120, and the infrared transmitter 130.

The controller 200 determines whether the output of the illuminance sensor 110 is less than or equal to the first reference value and the output of the impact sensor 140 is greater than or equal to the third reference value. The description on the determination order is identical to the above.

In response to the output of the illuminance sensor 110 being less than or equal to the first reference value and the output of the impact sensor 140 being greater than or equal to the third reference value, the controller 200 may control the infrared transmitter 130 to transmit infrared rays. The description on the band of infrared rays transmitted from the infrared transmitter 130 is identical to the above.

When the transmitted infrared rays reflected from an obstacle and return to the infrared sensor 120, the controller 200 may determine that a touch input is received from a user in response to the output of the infrared sensor 120 being greater than or equal to the second reference value, and may perform an operation corresponding to the combination of the output of the illuminance sensor 110, the output of the impact sensor 140, and the output of the infrared sensor 120.

By using the illuminance sensor 110, the impact sensor 140, the infrared transmitter 130, and the infrared sensor 120 when determining whether a touch input is received from a user, the accuracy of the determination and the utilization of the sensors may be improved.

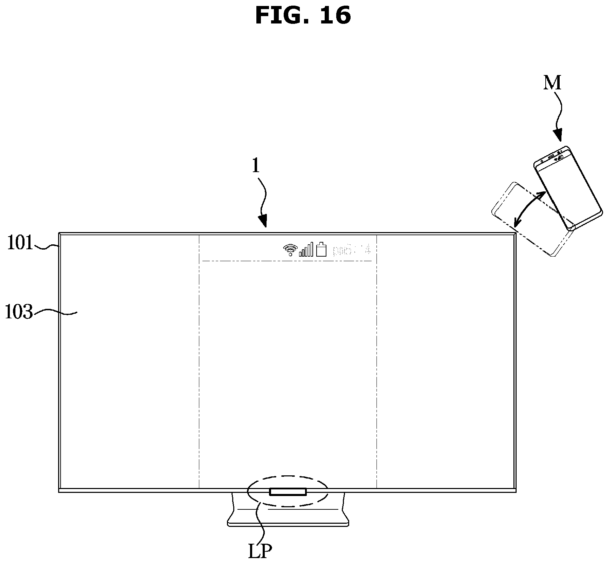

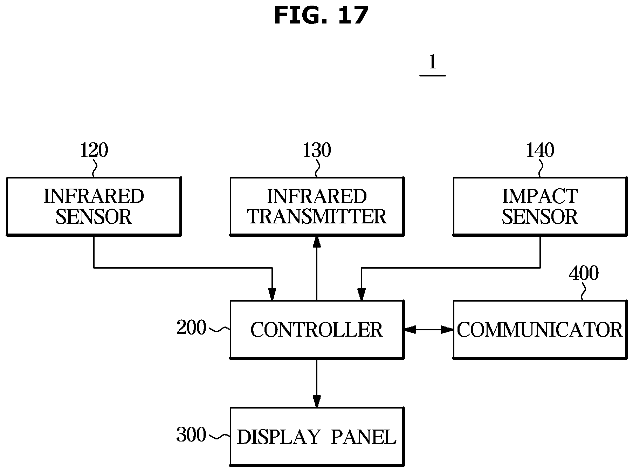

FIG. 16 is a diagram illustrating an example of using an impact sensor of a display apparatus according to an embodiment, and FIG. 17 is a control block diagram illustrating a display apparatus including a communicator according to an embodiment.

Referring to FIG. 16, when the display apparatus 1 having the impact sensor 140 mounted thereon collides with a mobile device M, an impact occurs in the display apparatus 1. The controller 200 compares the output of the impact sensor 140 with a fourth reference value, and in response to the output of the impact sensor 140 being greater than or equal to the fourth reference value, the controller 200 may perform a mirroring operation of displaying a screen of the mobile device M on the display apparatus 1 or displaying a screen of the display apparatus 1 on the mobile device M.

The lower limit of the output of the impact sensor 140, which is considered as a value indicating that the mobile device M has collided with the display apparatus 1, may be determined according to empirical data based on experiment, statistics, theory, simulation, etc., and may be stored in a memory of the controller 200. The fourth reference value may have a value greater than the third reference value for determining a touch input by a user.

Referring to FIG. 17, the display apparatus 1 may further include a communicator 400 to exchange signals with the mobile device M. The communicator 400 may include at least one of a Wi-Fi communication module, a Bluetooth communication module, a 4G communication module, a 5G communication module, or the like, to perform wireless communication to exchange signals with an external device or an external server. The communicator 400 may further include a wired communication module.

The controller 200 may compare the output of the impact sensor 140 with the fourth reference value, and in response to the output of the impact sensor 140 being greater than or equal to the fourth reference value, receive an image signal from the mobile device M through the communicator 400 and control the display panel 300 to display the received image signal. Conversely, the controller 200 may transmit an image signal to the mobile device M through the communicator 400. In this embodiment, the mobile device M does not necessarily have to come into physical contact with the display apparatus 1 in order to perform a mirroring operation on the display apparatus 1. For example, the communicator 400 of the display apparatus 1 may be able to perform Near Field Communication (NFC) and detect the presence of the mobile device M when the mobile device M is in certain proximity to the display apparatus 1 or through other wireless means, such as Bluetooth or Wi-Fi described above.

Furthermore, in order to distinguish a touch input by a user from a collision of the mobile device M and the display apparatus 1 for mirroring operation, the controller 200 may perform mirroring only in response to the output of the illuminance sensor 110 being greater than the first reference value or the output of the infrared sensor 120 being less than the second reference value.

By using the impact sensor 140 not only to determine a touch input by a user, but also to perform mirroring with a mobile device, the utilization of parts may be improved and the manufacturing cost may be reduced.

When determining whether a touch by a user is input, the display apparatus 1 may selectively use the illuminance sensor 110, the impact sensor 140, and the infrared transmitter 130 according to an embodiment.

For example, even when the impact sensor 140 is provided in the display apparatus 1, the determination of whether a touch by a user is input may be performed by using only the output of the illuminance sensor 110 and the output of the infrared sensor 120, without using the output of the impact sensor 140. In this case, the output of the impact sensor 140 may be used for mirroring between the mobile device M and the display apparatus 1.

As another example, even when the illuminance sensor 110 is provided in the display apparatus 1, the determination of whether a touch by a user is input may be performed only using the output of the impact sensor 140 and the output of the infrared sensor 120, without using the output of the illuminance sensor 110. In this case, the output of the illuminance sensor 110 may be used to adjust the brightness of an image displayed on the display panel 300.

As another example, even when the infrared transmitter 130 is provided in the display apparatus 1, the determination of whether a touch by a user is input may be performed by using only the infrared sensor 120 to detect infrared rays emitted from the human body without using the infrared transmitter 130. In this case, the infrared transmitter 130 may be used to transmit a signal to the set-top box ST connected to the display apparatus 1.

Hereinafter, a method of controlling a display apparatus according to an embodiment will be described. The method of controlling a display apparatus according to the embodiment may be executed using the above-described display apparatus 1. Accordingly, the contents described above with reference to FIGS. 1 to 17 may also be applied to the method of controlling the display apparatus.

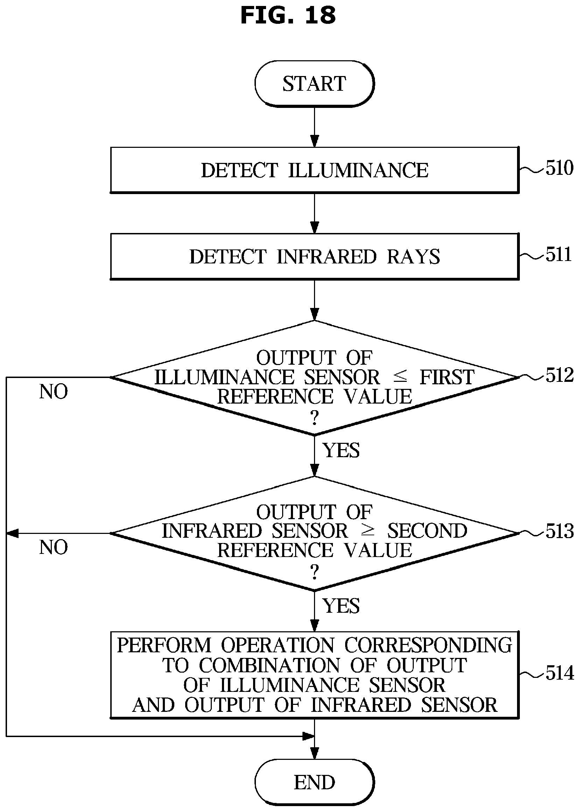

FIG. 18 is a flowchart showing a method of controlling a display apparatus according to an embodiment.

Referring to FIG. 18, a method of controlling a display apparatus according to an embodiment includes detecting illuminance using the illuminance sensor 110 (510), detecting infrared rays using the infrared sensor 120 (511), and in response to the output of the illuminance sensor 110 being less than or equal to the first reference value (YES in operation 512), and the output of the infrared sensor 120 being greater than or equal to the second reference value (YES in operation 513), performing an operation corresponding to the combination of the output of the illuminance sensor 110 and the output of the infrared sensor 120 (514).

As described above, it may be determined that the illuminance sensor 110 is covered by an obstacle in response to the output of the illuminance sensor 110 decreasing to a level less than or equal to the first reference value, and in this case, it may be determined that the obstacle covering the illuminance sensor 110 is a human based on determining that the output of the infrared sensor 120 is greater than or equal to the second reference value. That is, it may be determined that a touch by a user is input on the basis of the outputs of the illuminance sensor 110 and the infrared sensor 120.

Although the detection of illuminance is illustrated as occurring prior to the detection of infrared rays in the flowchart, the illuminance sensor 110 may detect the illuminance in real time or periodically irrespective of the detection of infrared rays, and the infrared sensor 120 may also detect infrared rays in real time or periodically irrespective of the detection of illuminance. In other words, the order in which the detections are performed by the illumination sensor 110 and the infrared sensor 120 is not limited thereto, and may be performed in an order different from that shown in FIG. 18.

An operation of comparing the output of the illuminance sensor 110 with the first reference value and an operation of comparing the output of the infrared sensor 120 with the second reference value may be simultaneously or sequentially performed. For example, the controller 200 may compare the output of the illuminance sensor 110 with the first reference value, and in response to the output of the illuminance sensor 110 being less than or equal to the first reference value, compare the output of the infrared sensor 120 with the second reference value. Alternatively, the controller 200 may first compare the output of the infrared sensor 120 with the second reference value, and based on determining that the output of the infrared sensor 120 is greater than or equal to the second reference value, the controller 200 may compare the output of the illuminance sensor 110 with the first reference value.

As another example, the controller may detect infrared rays in response to the output of the illuminance sensor 110 being less than or equal to the first reference value, and may perform an operation corresponding to the combination of the outputs of the illuminance sensor 110 and the infrared sensor 120 in response to the output of the infrared sensor 120 being greater than or equal to the second reference value.

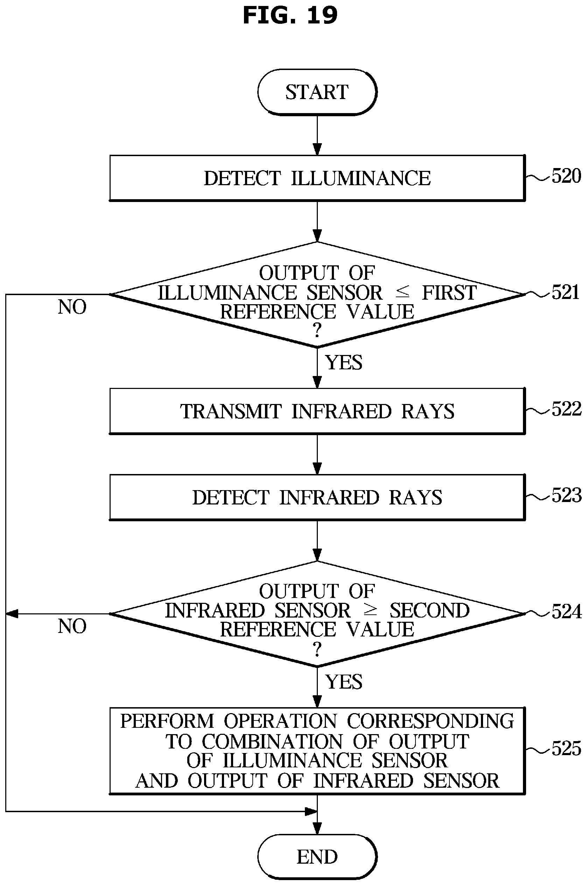

FIG. 19 is a flowchart showing a method of controlling a display apparatus in which infrared rays are transmitted according to an embodiment.

Referring to FIG. 19, the method of controlling the display apparatus according to an embodiment includes detecting illuminance using the illuminance sensor 110 (520), and in response to the output of the illuminance sensor 110 being less than the first reference value (YES in operation 521), transmitting infrared rays using the infrared transmitter 130 (522), and detecting the infrared rays reflected from a surface of an object using the infrared sensor 120 (523). In addition, the method may further include, in response to the output of the infrared sensor 120 being greater than or equal to the second reference value (YES in operation 524), performing an operation corresponding to the combination of the output of the illuminance sensor 110 and the output of the infrared sensor 120 (525).

Here, the infrared rays detected by the infrared sensor 120 are infrared rays transmitted from the infrared transmitter 130 that are returning after being reflected from an obstacle. As described with reference to FIG. 16, the infrared rays detected by the infrared sensor 120 are infrared rays emitted from the human body. Accordingly, the second reference value compared with the output of the infrared sensor 120 in the embodiment illustrated in FIG. 19 may have a value different from that of the second reference value provided when the infrared transmitter 130 described above is not used.

The infrared transmitter 130 may transmit infrared rays of a specific band. For example, the infrared transmitter 130 may transmit infrared rays having a peak in a band of 900nm to 950nm. Specifically, the infrared transmitter 130 may transmit infrared rays having a peak in a band of around 940 nm. When infrared rays having a peak in the band of around 940nm are reflected from the human body, the infrared rays has a small difference in reflectance values despite different skin colors. As such, an error due to different skin colors of the users may be reduced in the determination result.

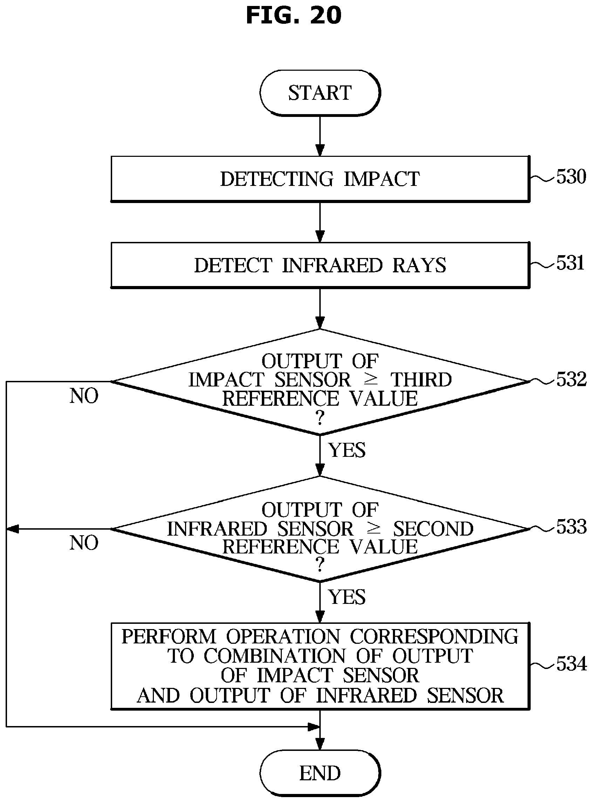

FIG. 20 is a flowchart showing a method of controlling a display apparatus to which an impact is applied according to an embodiment.

Referring to FIG. 20, the method of controlling the display apparatus according to an embodiment includes detecting an impact applied to the display apparatus 1 using the impact sensor 140 (530), detecting infrared rays using the infrared sensor 120 (531), and in response to the output of the impact sensor 140 being greater than or equal to the third reference value (YES in operation in 532), and in response to the output of the infrared sensor 120 being greater than or equal to the second reference value (YES in operation 533), performing an operation corresponding to the combination of the output of the impact sensor 140 and the output of the infrared sensor 120 (534).

An acceleration sensor may be used as the impact sensor 140 to detect an impact applied to the display apparatus 1.

As described above in various embodiments of the display apparatus 1, in response to the output of the impact sensor 140 increasing to a level greater than or equal to the third reference value, it may be determined that the display apparatus 1 has come into a contact, and in response to the output of the infrared sensor 120 being greater than or equal to the second reference value, it may be determined that an object coming in contact with the display apparatus 1 is a human. That is, it may be determined that a touch by a user is input on the basis of the outputs of the impact sensor 140 and the infrared sensor 120.

Although the detection of an impact is illustrated as occurring prior to the detection of infrared rays in the flowchart, the impact sensor 140 may detect an impact in real time or periodically irrespective of the detection of infrared rays, and the infrared sensor 120 may also detect infrared rays in real time or periodically irrespective of the detection of an impact.

An operation of comparing the output of the impact sensor 140 with the third reference value and an operation of comparing the output of the infrared sensor 120 with the second reference value may be performed simultaneously or sequentially. For example, the controller 200 may compare the output of the impact sensor 140 with the third reference value, and in response to the output of the impact sensor 140 being less than or equal to the third reference value, compare the output of the infrared sensor 120 with the second reference value. Alternatively, the controller 200 may first compare the output of the infrared sensor 120 with the second reference value, and in response to the output of the infrared sensor 120 being greater than or equal to the second reference value, compare the output of the impact sensor 140 with the third reference value.

As another example, the controller 200 may detect infrared rays in response to the output of the impact sensor 140 being greater than or equal to the third reference value. In addition, in response to the output of the infrared sensor 120 being greater than or equal to the second reference value, the controller 200 may perform an operation corresponding to the combination of the output of the impact sensor 140 and the output of the infrared sensor 120.

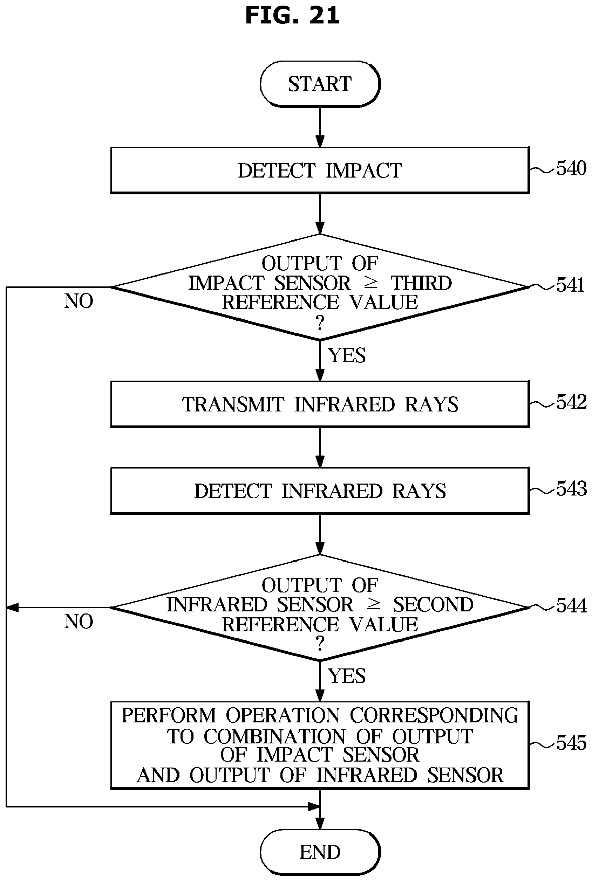

FIG. 21 is a flowchart showing a method of controlling a display apparatus in which an impact applied to the display apparatus is detected and infrared rays are transmitted according to an embodiment.

Referring to FIG. 21, the method of method of controlling the display apparatus according to an embodiment may include detecting an impact applied to the display apparatus 1 using the impact sensor 140 (540), and in response to the output of the impact sensor 140 being greater than or equal to the third reference value (YES in operation 541), transmitting infrared rays using the infrared transmitter 130 (542) and detecting the infrared rays using the infrared sensor 120 (543). In addition, the method may include, in response to the output of the infrared sensor 120 being greater than or equal to the second reference value (YES in operation 544), performing an operation corresponding to the combination of the output of the impact sensor 140 and the output of the infrared sensor 120 (545).

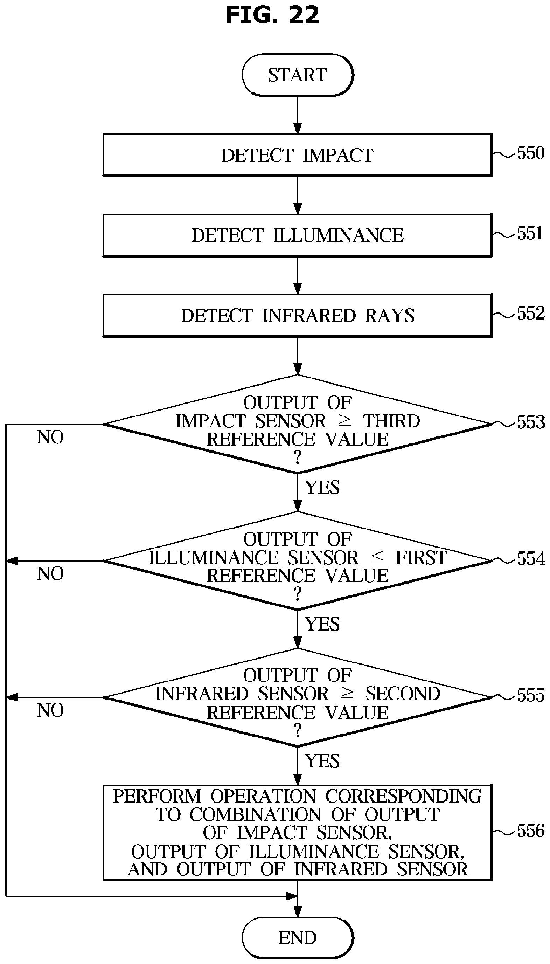

FIG. 22 is a flowchart showing a method of controlling a display apparatus in which an impact applied to the display apparatus, an illuminance, and infrared rays are detected according to an embodiment.

Referring to FIG. 22, the method of controlling the display apparatus according to an embodiment may include detecting an impact applied to the display apparatus 1 using the impact sensor 140 (550), detecting an illuminance using the illuminance sensor 110 (551), and detecting infrared rays using the infrared sensor 120 (552). In addition, the method may include, in response to the output of the impact sensor 140 being equal to or greater than the third reference value (YES in operation 553), the output of the illuminance sensor 110 being equal to or less than the first reference value (YES in operation 554), and the output of the infrared sensor 120 being greater than or equal to the second reference value (YES in operation 555), performing an operation corresponding to the combination of the output of the impact sensor 140, the output of the illuminance sensor 110, and the output of the infrared sensor 120 (556).

As described above, the order of the detections or the order of comparisons with the respective reference values are not limited to the flowchart shown in FIG. 22. Impact detection, illuminance detection, and infrared detection may be performed in real time or periodically regardless of the order illustrated in FIG. 22.

Also, the comparisons with the respective reference values may also be performed simultaneously or sequentially.

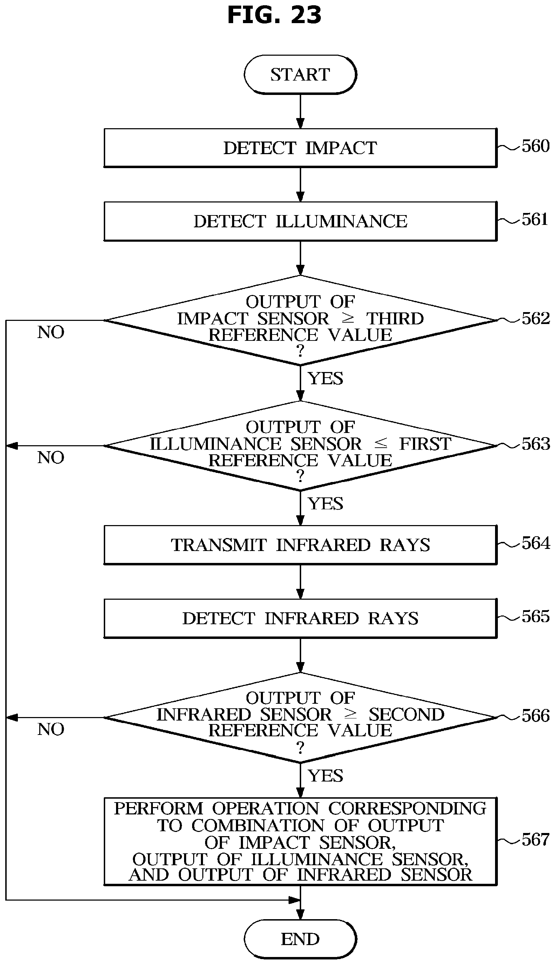

FIG. 23 is a flowchart showing a method of controlling a display apparatus in a case where an impact applied to the display apparatus and an illuminance are detected, infrared rays are transmitted, and infrared rays are detected according to an embodiment.

Referring to FIG. 23, the method of controlling the display apparatus according to an embodiment includes detecting an impact using the impact sensor 140 (560), detecting an illuminance using the illumination sensor 110 (561), and in response to the output of the impact sensor 140 being greater than or equal to the third reference value (562) and the output of the illuminance sensor 110 being less than or equal to the first reference value (563), transmitting infrared rays using the infrared transmitter 130 (564).

In addition, the method may include detecting infrared rays using the infrared sensor 120 (565), and in response to the output of the infrared sensor 120 being greater than or equal to the second reference value, performing an operation corresponding to the combination of the output of the impact sensor 140, the output of the illuminance sensor 110, and the output of the infrared sensor 120 (566).

On the other hand, the output of the infrared sensor 120 being less than the second reference value may indicate that a touch by a user is not input. In this case, the output of the illuminance sensor 110 may be considered a value representing the illuminance of the space in which the display apparatus 1 is located, and thus the controller 200 may adjust the brightness of an image displayed on the display panel 300 on the basis of the output of the illuminance sensor 110. However, in response to the output of the illuminance sensor 110 being less than or equal to the first reference value, it may be determined that the illuminance sensor 110 is covered by an obstacle, and therefore, adjustment of the brightness of the image based on the output of the illuminance sensor 110 may be not be performed.

Further, the output of the impact sensor 140 may be used for mirroring between the mobile device M and the display apparatus 1. For example, the controller 200 may, in response to the output of the impact sensor 140 being greater than or equal to the fourth reference value, perform mirroring of displaying the screen of the mobile device M on the display apparatus 1 or displaying the screen of the display apparatus 1 on the mobile device M.

With the display apparatus and the control method thereof according to the above-described embodiments, a command input by a user may be determined using a plurality of sensors provided in the display apparatus, and an operation corresponding to the input may be performed by the display apparatus. Accordingly, the plurality of sensors provided in the display apparatus may serve as or replace a button-type input device of the conventional technology.

Although the combination of the plurality of sensors according to the one or more embodiments may replace the button-type input device, it does not mean that the display apparatus according to the embodiments may not include a button-type input device. Therefore, a display apparatus including a button-type input device may also be within the scope of the disclosure.

As is apparent from the description above, the display apparatus and the method of controlling the same can use a plurality of sensors provided in the display apparatus as an input device for receiving a user command from a user.

The foregoing embodiments are only examples to more clearly describe the disclosure.

## Claims

1. A display apparatus (1) comprising:
a display panel (300);
an illuminance sensor (110);
an infrared sensor (120); and
a controller (200), **characterized in that** the controller (200) is configured to:
determine that a touch of a user is input in response to an output of the illuminance sensor (110) being less than or equal to a first reference value and an output of the infrared sensor (120) being greater than or equal to a second reference value,
determine an action of the user corresponding to a combination of the output of the illuminance sensor (110) and the output of the infrared sensor (120) in response to determining that the touch of the user is input, and
perform an operation corresponding to the action of the user.

2. The display apparatus (1) of claim 1, further comprising an infrared transmitter (130),
wherein the controller (200) is further configured to control the infrared transmitter (130) to transmit infrared rays based on the output of the illuminance sensor (110) being less than or equal to the first reference value.

3. The display apparatus (1) of claim 2, wherein the infrared sensor (120), based on receiving the infrared rays transmitted by the infrared transmitter (130) that are reflected from an obstacle, detects the reflected infrared rays, and
the controller (200) is further configured to compare the output of the infrared sensor (120) that has detected the reflected infrared rays with the second reference value.

4. The display apparatus (1) of claim 1, wherein, based on the output of the illuminance sensor (110) being greater than the first reference value or the output of the infrared sensor (120) being less than the second reference value, the controller (200) is further configured to adjust a brightness of an image displayed on the display panel (300) based on the output of the illuminance sensor (110), and
based on the output of the illuminance sensor (110) being less than the first reference value, the controller (200) is further configured to suspend adjusting the brightness of the image displayed on the display panel (300).

5. The display apparatus (1) of claim 2, wherein the infrared sensor (120) detects an infrared signal transmitted from a remote controller (400), and
based on the output of the illuminance sensor (110) being greater than the first reference value or the output of the infrared sensor (120) being less than the second reference value, the controller (200) is further configured to perform an operation corresponding to the infrared signal transmitted from the remote controller (400).

6. The display apparatus (1) of claim 2, wherein the infrared sensor (120) detects an infrared signal transmitted from a remote controller (400), and
based on the output of the infrared sensor (120) having a specific pattern, the controller (200) is further configured to perform an operation corresponding to the infrared signal transmitted from the remote controller (400).

7. The display apparatus (1) of claim 2, further comprising an impact sensor (140),
wherein, based on an output of the impact sensor (140) being greater than or equal to a third reference value, the output of the illuminance sensor (110) being less than or equal to the first reference value, and the output of the infrared sensor (120) being greater than or equal to the second reference value, the controller (200) is further configured to perform an operation corresponding to a combination of the output of the impact sensor (140), the output of the illuminance sensor (110), and the output of the infrared sensor (120).

8. The display apparatus (1) of claim 5, wherein the infrared transmitter (130) transmits infrared rays in a band overlapping with a band of infrared rays transmitted by the remote controller (400).

9. The display apparatus (1) of claim 8, wherein the controller (200) is further configured to generate an infrared signal including a control signal for a set-top box (ST) connected to the display apparatus (1), and control the infrared transmitter (130) to transmit the infrared signal to the set-top box (ST).

10. A method of controlling a display apparatus, the method comprising:
detecting (510) an illuminance using an illuminance sensor; and
detecting (511) infrared rays using an infrared sensor;
**characterized by**
determining that a touch of a user is input in response to an output of the illuminance sensor being less than or equal to a first reference value (512) and an output of the infrared sensor being greater than or equal to a second reference value (513);
determining an action of the user corresponding to a combination of the output of the illuminance sensor and the output of the infrared sensor; and
performing (514) an operation corresponding to the action of the user.

11. The method of claim 10, further comprising
based on the output of the illuminance sensor being less than or equal to the first reference value (521), transmitting (522) infrared rays, and
the detecting (523) of the infrared rays comprises, based on receiving the infrared rays transmitted by the infrared transmitter that are reflected from an obstacle, detecting the reflected infrared rays.

12. The method of claim 10, further comprising, based on the output of the illuminance sensor being greater than the first reference value or the output of the infrared sensor being less than the second reference value, adjusting a brightness of an image displayed on the display panel based on the output of the illuminance sensor.

13. The method of claim 10, wherein the detecting of the infrared rays further comprises detecting an infrared signal transmitted from a remote controller, and
wherein the method further comprises, based on the output of the illuminance sensor being greater than the first reference value or the output of the infrared sensor being less than the second reference value, performing an operation corresponding to the infrared signal transmitted from the remote controller.

14. The method of claim 10, wherein the detecting of the infrared rays further comprises detecting an infrared signal transmitted from a remote controller, and
wherein the method further comprises, based on the output of the infrared sensor having a specific pattern, performing an operation corresponding to the infrared signal transmitted from the remote controller.

15. The method of claim 10, further comprising detecting (560) an impact applied to the display apparatus using an impact sensor,
wherein, based on an output of the impact sensor being greater than or equal to a third reference value (562), the output of the illuminance sensor being less than or equal to the first reference value (563), and the output of the infrared sensor being greater than or equal to the second reference value, performing an operation corresponding to a combination of the output of the impact sensor, the output of the illuminance sensor, and the output of the infrared sensor (567).

## Patentansprüche

1. Eine Anzeigevorrichtung (1), die Folgendes umfasst:
eine Anzeigetafel (300);
einen Beleuchtungsstärkesensor (110);
einen Infrarotsensor (120); und
eine Steuerung (200), **dadurch gekennzeichnet, dass** die Steuerung (200) konfiguriert ist zum:
Bestimmen, dass eine Berührung eines Benutzers eingegeben wird, als Reaktion darauf, dass eine Ausgabe des Beleuchtungsstärkesensors (110) kleiner oder gleich einem ersten Referenzwert ist und eine Ausgabe des Infrarotsensors (120) größer oder gleich einem zweiten Referenzwert ist,
Bestimmen einer Aktion des Benutzers, die einer Kombination der Ausgabe des Beleuchtungsstärkesensors (110) und der Ausgabe des Infrarotsensors (120) entspricht, als Reaktion auf die Bestimmung, dass die Berührung des Benutzers eingegeben wird, und
Durchführen einer der Aktion des Benutzers entsprechenden Operation.

2. Die Anzeigevorrichtung (1) nach Anspruch 1, die ferner einen Infrarotsender (130) umfasst,
wobei die Steuerung (200) ferner so konfiguriert ist, dass sie den Infrarotsender (130) so steuert, dass er Infrarotstrahlen basierend darauf, dass die Ausgabe des Beleuchtungsstärkesensors (110), kleiner oder gleich dem ersten Referenzwert ist, sendet.

3. Die Anzeigevorrichtung (1) nach Anspruch 2, wobei der Infrarotsensor (120) auf der Grundlage des Empfangs der von dem Infrarotsender (130) gesendeten Infrarotstrahlen, die von einem Hindernis reflektiert werden, die reflektierten Infrarotstrahlen erfasst, und
die Steuerung (200) ferner so konfiguriert ist, dass sie die Ausgabe des Infrarotsensors (120), die die reflektierten Infrarotstrahlen erfasst hat, mit dem zweiten Referenzwert vergleicht.

4. Die Anzeigevorrichtung (1) nach Anspruch 1, wobei, basierend darauf, dass die Ausgabe des Beleuchtungsstärkesensors (110), größer als der erste Referenzwert ist oder die Ausgabe des Infrarotsensors (120), kleiner als der zweite Referenzwert ist, die Steuerung (200) weiterhin konfiguriert ist, um eine Helligkeit eines auf der Anzeigetafel (300) angezeigten Bildes basierend auf der Ausgabe des Beleuchtungsstärkesensors (110) einzustellen, und
basierend darauf, dass die Ausgabe des Beleuchtungsstärkesensors (110), ie kleiner als der erste Referenzwert ist, idie Steuerung (200) weiterhin so konfiguriert ist, dass sie die Einstellung der Helligkeit des auf der Anzeigetafel (300) angezeigten Bildes aussetzt.

5. Die Anzeigevorrichtung (1) nach Anspruch 2, wobei der Infrarotsensor (120) ein von einer Fernsteuerung (400) übertragenes Infrarotsignal erfasst, und
basierend darauf, dass die Ausgabe des Beleuchtungsstärkesensors (110), die größer als der erste Referenzwert ist oder die Ausgabe des Infrarotsensors (120), kleiner als der zweite Referenzwert ist, idie Steuerung (200) ferner so konfiguriert ist, dass sie eine Operation durchführt, die dem von der Fernsteuerung (400) übertragenen Infrarotsignal entspricht.

6. Die Anzeigevorrichtung (1) nach Anspruch 2, wobei der Infrarotsensor (120) ein von einer Fernsteuerung (400) übertragenes Infrarotsignal erfasst, und
basierend darauf, dass die Ausgabe des Infrarotsensors (120), ein spezifisches Muster aufweist, die Steuerung (200) ferner so konfiguriert ist, dass sie eine Operation durchführt, die dem von der Fernsteuerung (400) übertragenen Infrarotsignal entspricht.

7. Die Anzeigevorrichtung (1) nach Anspruch 2, die außerdem einen Aufprallsensor (140) umfasst,
wobei, basierend darauf, dass eine Ausgabe des Aufprallsensors (140), größer oder gleich einem dritten Referenzwert ist, die Ausgabe des Beleuchtungsstärkesensors (110), kleiner oder gleich dem ersten Referenzwert ist, und die Ausgabe des Infrarotsensors (120), größer oder gleich dem zweiten Referenzwert ist, die Steuerung (200) weiterhin konfiguriert ist, um eine Operation durchzuführen, die einer Kombination der Ausgabe des Aufprallsensors (140), der Ausgabe des Beleuchtungsstärkesensors (110) und der Ausgabe des Infrarotsensors (120) entspricht.

8. Die Anzeigevorrichtung (1) nach Anspruch 5, wobei der Infrarotsender (130) Infrarotstrahlen in einem Band sendet, das sich mit einem Band von Infrarotstrahlen überschneidet, die von der Fernsteuerung (400) gesendet werden.

9. Die Anzeigevorrichtung (1) nach Anspruch 8, wobei die Steuerung (200) ferner so konfiguriert ist, dass sie ein Infrarotsignal erzeugt, das ein Steuersignal für eine mit der Anzeigevorrichtung (1) verbundene Set-Top-Box (ST) enthält, und den Infrarotsender (130) so steuert, dass er das Infrarotsignal an die Set-Top-Box (ST) sendet.

10. Ein Verfahren zur Steuerung einer Anzeigevorrichtung, wobei das Verfahren umfasst:
Erfassen (510) einer Beleuchtungsstärke unter Verwendung eines Beleuchtungsstärkesensors; und
Erfassen (511) von Infrarotstrahlen mit einem Infrarotsensor;
**gekennzeichnet durch**
Bestimmen, dass eine Berührung eines Benutzers eingegeben wird, als Reaktion darauf, dass eine Ausgabe des Beleuchtungsstärkesensors kleiner oder gleich einem ersten Referenzwert (512) ist und eine Ausgabe des Infrarotsensors größer oder
gleich einem zweiten Referenzwert (513) ist;
Bestimmen einer Aktion des Benutzers, die einer Kombination aus der Ausgabe des Beleuchtungsstärkesensors und der Ausgabe des Infrarotsensors entspricht; und
Durchführen (514) einer Operation, die der Aktion des Benutzers entspricht.

11. Das Verfahren nach Anspruch 10, das ferner Folgendes umfasst basierend darauf, dass die Ausgabe des Beleuchtungsstärkesensors, kleiner oder gleich dem ersten Referenzwert (521) ist, Senden (522) von Infrarotstrahlen, und
wobei das Erfassen (523) der Infrarotstrahlen das Erfassen der reflektierten Infrarotstrahlen auf der Grundlage des Empfangs der von dem Infrarotsender gesendeten Infrarotstrahlen, die von einem Hindernis reflektiert werden, umfasst.

12. Das Verfahren nach Anspruch 10, das ferner umfasst, basierend darauf, dass die Ausgabe des Beleuchtungsstärkesensors, größer als der erste Referenzwert ist oder die Ausgabe des Infrarotsensors, kleiner als der zweite Referenzwert ist, eine Helligkeit eines auf der Anzeigetafel angezeigten Bildes auf der Grundlage der Ausgabe des Beleuchtungsstärkesensors einzustellen.

13. Das Verfahren nach Anspruch 10, wobei das Erfassen der Infrarotstrahlen ferner das Erfassen eines von einer Fernsteuerung gesendeten Infrarotsignals umfasst, und
wobei das Verfahren weiterhin umfasst, basierend darauf, dass die Ausgabe des Beleuchtungsstärkesensors, größer als der erste Referenzwert ist oder die Ausgabe des Infrarotsensors, kleiner als der zweite Referenzwert ist, eine Operation durchzuführen, die dem von der Fernsteuerung übertragenen Infrarotsignal entspricht.

14. Das Verfahren nach Anspruch 10, wobei das Erfassen der Infrarotstrahlen ferner das Erfassen eines von einer Fernsteuerung gesendeten Infrarotsignals umfasst, und
wobei das Verfahren ferner umfasst, basierend darauf, dass die Ausgabe des Infrarotsensors, ein spezifisches Muster aufweist, eine Operation durchzuführen, die dem von der Fernsteuerung übertragenen Infrarotsignal entspricht.

15. Das Verfahren nach Anspruch 10, das ferner das Erfassen (560) eines auf die Anzeigevorrichtung einwirkenden Stoßes unter Verwendung eines Aufprallsensors umfasst,
wobei, basierend darauf, dass eine Ausgabe des Aufprallsensors, größer oder gleich einem dritten Referenzwert (562) ist, die Ausgabe des Beleuchtungsstärkesensors, kleiner oder gleich dem ersten Referenzwert (563) ist und die Ausgabe des Infrarotsensors, größer oder gleich dem zweiten Referenzwert ist, eine Operation durchgeführt wird, die einer Kombination der Ausgabe des Aufprallsensors, der Ausgabe des Beleuchtungsstärkesensors und der Ausgabe des Infrarotsensors (567) entspricht.

## Revendications

1. Un appareil d'affichage (1) comprenant :
un panneau d'affichage (300) ;
un capteur d'éclairement (110) ;
un capteur infrarouge (120) ; et
une commande (200), **caractérisée en ce que** la commande (200) est configurée pour :
déterminer qu'un toucher d'un utilisateur est entré en réponse à une sortie du capteur d'éclairement (110) étant inférieure ou égale à une première valeur de référence et une sortie du capteur infrarouge (120) étant supérieure ou égale à une deuxième valeur de référence,
déterminer une action de l'utilisateur correspondant à une combinaison de la sortie du capteur d'éclairement (110) et de la sortie du capteur infrarouge (120) en réponse à la détermination que le toucher de l'utilisateur est entrée, et
effectuer une opération correspondant à l'action de l'utilisateur.

2. L'appareil d'affichage (1) selon la revendication 1, comprenant en outre un émetteur infrarouge (130),
dans lequel la commande (200) est en outre configurée pour commander l'émetteur infrarouge (130) pour transmettre des rayons infrarouges sur la base de la sortie du capteur d'éclairement (110) étant inférieure ou égale à la première valeur de référence.

3. L'appareil d'affichage (1) selon la revendication 2, dans lequel le capteur infrarouge (120) détecte les rayons infrarouges réfléchis sur la base de la réception des rayons infrarouges émis par l'émetteur infrarouge (130) qui sont réfléchis par un obstacle, , et
la commande (200) est en outre configurée pour comparer la sortie du capteur infrarouge (120) qui a détecté les rayons infrarouges réfléchis avec la deuxième valeur de référence.

4. L'appareil d'affichage (1) selon la revendication 1, dans lequel la commande est en outre configurée pour régler, sur la base de la sortie du capteur d'éclairement (110) étant supérieure à la première valeur de référence ou de la sortie du capteur infrarouge (120) étant inférieure à la deuxième valeur de référence, une luminosité d'une image affichée sur le panneau d'affichage (300) sur la base de la sortie du capteur d'éclairement (110), et
la commande (200) est en outre configurée pour suspendre, sur la base de la sortie du capteur d'éclairement (110) étant inférieure à la première valeur de référence, le réglage de la luminosité de l'image affichée sur le panneau d'affichage (300).

5. L'appareil d'affichage (1) selon la revendication 2, dans lequel le capteur infrarouge (120) détecte un signal infrarouge émis depuis une télécommande (400), et,
sur la base de la sortie du capteur d'éclairement (110) étant supérieure à la première valeur de référence ou de la sortie du capteur infrarouge (120) étant inférieure à la deuxième valeur de référence, la commande (200) est en outre configurée pour exécuter une opération correspondant au signal infrarouge transmis par la télécommande (400).

6. L'appareil d'affichage (1) selon la revendication 2, dans lequel le capteur infrarouge (120) détecte un signal infrarouge émis par une télécommande (400), et,
la commande (200) est en outre configurée pour effectuer, sur la base de la sortie du capteur infrarouge (120) ayant un motif spécifique, une opération correspondant au signal infrarouge transmis par la télécommande (400).

7. L'appareil d'affichage (1) selon la revendication 2, comprenant en outre un capteur d'impact (140),
dans lequel, la commande est en outre configurée pour effectuer, sur la base d'une sortie du capteur d'impact (140) étant supérieure ou égale à une troisième valeur de référence, la sortie du capteur d'éclairement (110) étant inférieure ou égale à la première valeur de référence, et la sortie du capteur infrarouge (120) étant supérieure ou égale à la deuxième valeur de référence une opération correspondant à une combinaison de la sortie du capteur d'impact (140), de la sortie du capteur d'éclairement (110), et de la sortie du capteur infrarouge (120).

8. L'appareil d'affichage (1) selon la revendication 5, dans lequel l'émetteur infrarouge (130) transmet des rayons infrarouges dans une bande chevauchant une bande de rayons infrarouges transmis par la télécommande (400).

9. L'appareil d'affichage (1) selon la revendication 8, dans lequel la commande (200) est en outre configurée pour générer un signal infrarouge comprenant un signal de commande pour un boîtier décodeur (ST) connecté à l'appareil d'affichage (1), et pour commander l'émetteur infrarouge (130) pour transmettre le signal infrarouge au boîtier décodeur (ST).

10. Un procédé de commande d'un appareil d'affichage, le procédé comprenant :
détecter (510) un éclairement en utilisant un capteur d'éclairement ; et
détecter (511) des rayons infrarouges à l'aide d'un capteur infrarouge ;
**caractérisé par**
la détermination du fait qu'un toucher d'un utilisateur est entré en réponse à une sortie du capteur d'éclairement qétant inférieure ou égale à une première valeur de référence (512) et une sortie du capteur infrarouge étant supérieure ou égale à une deuxième valeur de référence (513) ;
la détermination du fait qu'une action de l'utilisateur correspondant à une combinaison de la sortie du capteur d'éclairement et de la sortie du capteur infrarouge ; et
l'exécution (514) d'une opération correspondant à l'action de l'utilisateur.

11. Le procédé selon la revendication 10, comprenant en outre
transmettre (522) des rayons infrarouges sur la base de la sortie du capteur d'éclairement étant inférieure ou égale à la première valeur de référence (521), , et
la détection (523) des rayons infrarouges comprenant la détection des rayons infrarouges réfléchis sur la base de la réception des rayons infrarouges émis par l'émetteur infrarouge qui sont réfléchis par un obstacle,.

12. Le procédé selon la revendication 10, comprenant en outre le réglage, sur la base de la sortie du capteur d'éclairement étant supérieure à la première valeur de référence ou de la sortie du capteur infrarouge étant inférieure à la deuxième valeur de référence, d'une luminosité d'une image affichée sur le panneau d'affichage sur la base de la sortie du capteur d'éclairement.

13. Le procédé selon la revendication 10, dans lequel la détection des rayons infrarouges comprend en outre la détection d'un signal infrarouge transmis par une télécommande, et
dans lequel le procédé comprend en outre l'exécution, sur la base de la sortie du capteur d'éclairement étant supérieure à la première valeur de référence ou de la sortie du capteur infrarouge étant inférieure à la deuxième valeur de référence, d'une opération correspondant au signal infrarouge transmis par la télécommande.

14. Le procédé selon la revendication 10, dans lequel la détection des rayons infrarouges comprend en outre la détection d'un signal infrarouge transmis par une télécommande, et
dans lequel le procédé comprend en outre l'exécution, sur la base de la sortie du capteur infrarouge ayant un motif spécifique, d'une opération correspondant au signal infrarouge transmis par la télécommande.

15. Le procédé selon la revendication 10, comprenant en outre la détection (560) d'un impact exercé sur le dispositif d'affichage en utilisant un capteur d'impact,
dans lequel, sur la base d'une sortie du capteur d'impact étant supérieure ou égale à une troisième valeur de référence (562), la sortie du capteur d'éclairement étant inférieure ou égale à la première valeur de référence (563), et la sortie du capteur infrarouge étant supérieure ou égale à la deuxième valeur de référence, une opération correspondant à une combinaison de la sortie du capteur d'impact, de la sortie du capteur d'éclairement et de la sortie du capteur infrarouge (567) est exécutée.
